# EUROPEAN PATENT APPLICATION

(11) **EP 1 884 622 A2**
(43) Date of publication of application: **06.02.2008**
(21) Application number: 07253028.0
(22) Date of filing: 01.08.2007
(51) Int. Cl.: F01D 5/18, F01D 5/28

(54) **Airfoil with customized convective cooling**

(30) Priority: 01.08.2006 US 497094
(71) Applicant: United Technologies Corporation, Hartford, Connecticut 06101 (US)
(72) Inventor: Devore, Matthew A., Manchester, CT 06040 (US); Paauwe, Corneil S., Manchester, CT 06040 (US)
(74) Representative: Tomlinson, Kerry John

(57) **Abstract**

An airfoil suitable for use in the turbine section of a jet engine. Said airfoil contains a core having a passage for conducting a coolant through said airfoil and discharging the coolant through a radially extending slot at the trailing edge of the airfoil. A flow barrier (50, 50) is mounted adjacent to the discharge slot within the flow passage which contains openings for tailoring the coolant flow distribution profile in the trailing edge region based upon some identifiable airfoil property such as the airfoil's radial pressure and/or temperature profile, or a combination of the pressure and temperature profiles.

## Description

### Field of the Invention

This invention relates to the internal cooling of an airfoil employed in a rotary machine and is particularly applicable to controlled internal cooling of a jet engine turbine blade.

### Background of the Invention

The term airfoil, as herein used, refers to either a rotor blade or a stator vane of the type employed in many types of rotary machine such as gas turbines, compressors, and the like. In the case of a jet engine turbine blade, for example, a coolant is typically introduced into the core of the blade through the blade root and is circulated through a core passage and finally discharged through a radially extended window or slotted opening located along the trailing edge of the airfoil. As disclosed in U.S. Patent No. 6,637,500 to Shah et al., trailing edge coolant flow passages are provided near the discharge slot to provide convective surface area and provide additional strength in this area. The passages are generally spaced apart at the same distance and the coolant flow at the trailing edge of the blade is generally uniform over the radial span of the blade.

### Summary of the Invention

It is an object of this invention to improve the internal convective cooling of an airfoil employed in a rotary machine.

It is a further object of the present invention to improve the internal convective cooling of a turbine blade utilized in a jet engine.

A still further object of the present invention is to tailor the flow profile of a coolant moving through the core of an airfoil to provide controlled cooling to regions of the airfoil which require more or less cooling.

Another object of the present invention is to contour the trailing edge flow of a cooling that is moving internally through an airfoil with particular regard to the temperature or pressure profile over the span of the airfoil or a combination of the two.

These and other objects of the invention are attained by means of an airfoil having an internal flow passage for routing a coolant through the core of the airfoil and discharging the coolant through a slot or window radially extended along the trailing edge of the airfoil. In the practice of the present invention, the trailing edge flow is governed by the pressure ratio over the trailing edge of the airfoil and a control barrier that is placed in the edge flow to selectively distribute the flow over the radial span of the airfoil in response to some identifiable characteristic of the airfoil such as the radial pressure or temperature profile of the airfoil or both.

### Brief Description of the Drawings

For a better understanding of these and other objects of the invention, reference will be made to the following detailed description of the invention, which is to be read in association with the following drawings, wherein:
Fig. 1 is a side elevation in section illustrating the component parts of a jet engine;
Fig. 2 is an enlarged partial view showing a turbine vane located in the first stage of the turbine section of the engine;
Fig. 3 is an enlarged sectional view taken along lines 3-3 in Fig. 2;
Fig. 4 is a partial sectional view taken along line 4-4 in Fig. 3 illustrating a plurality of pedestals mounted within the trailing edge flow region of the airfoil which are placed in the coolant flow path to control the distribution of flow within the airflow;
Fig. 5 is an enlarged top view illustrating the spacing between a pair of adjacent pedestals;
Fig. 6 is a chart illustrating a typical trailing edge pressure profile over the radial span of an airfoil;
Fig. 7 is a chart illustrating a typical temperature profile over the radial span of an airfoil;
Fig. 8 is a diagram illustrating how blockages within a baseline system can be employed to vary the flow distribution through an airfoil;
Fig. 9 is a graphic illustration in which the trailing edge flow of a baseline system is plotted against pressure ratio; and
Fig. 10 is a graphic illustration in which the trailing edge Mach number of a baseline system is plotted against pressure ratio.

### Detailed Description of the Invention

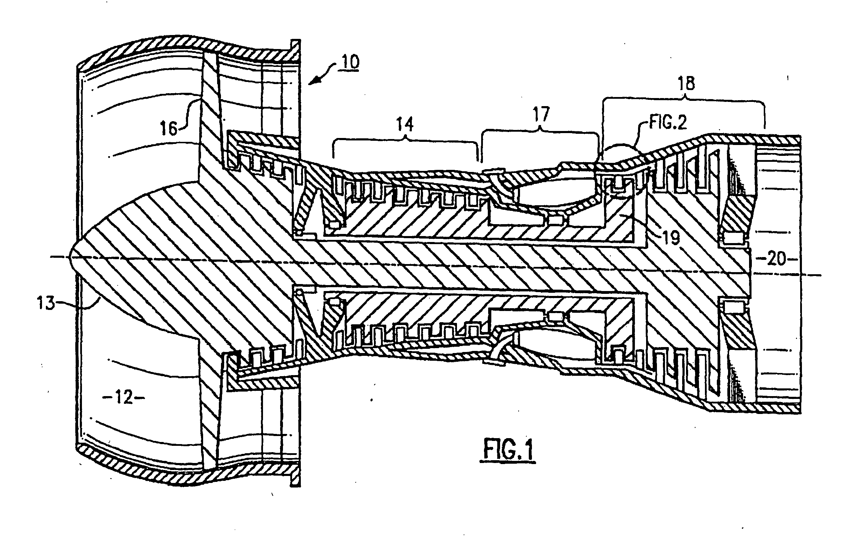

Referring initially to Fig. 1, there are shown the main components of a jet engine, generally referenced 10 in schematic outline. The engine includes a diffuser section 12 having a conical inlet 13 in which ram air is initially compressed and then passed on to an axial compressor 14 by means of a fan 16 located at the entrance to the compressor. Compressed air from the last stage of the compressor is fed into a series of combustion chambers, one or which is depicted as 17, where the compressed air is mixed with fuel and is ignited. Gases from the combustors are passed on to the turbine section 18 of the engine where the hot gases are expanded. The turbine section of the engine is coupled directly to the compressor by a common shaft 19. The power developed in the turbine is thus utilized to drive the compressor and other auxiliary engine components. Gases leaving the turbine are further expanded in the exhaust nozzle 20 of the engine and are ejected at a velocity greater than the flight velocity to product thrust.

Fig. 2 is an enlarged view of an airfoil 23 located in the first stage of the turbine, which is exposed to gases from the combustion chamber that are at relatively high temperatures and pressures. Accordingly, airfoil cooling in this region is at a premium. Fig. 3 is a section taken through the airfoil further illustrating the internal construction of the airfoil. The airfoil includes a core fabricated of any type of material or materials as presently known and used in the art. These materials may include but are not limited to ceramics, refractory metals, or a combination of the two materials. A pair of interconnected radially disposed passages 25 and 26 are provided in the core that are connected to a coolant entrance located in the root of the airfoil. Typically, coolant is air that is bled from the compressor section of the engine. The coolant, however, may be any fluid that is known and used in the art for providing convection type cooling to an airfoil surfaces.

With further reference to Fig. 4, the coolant flow conducted through passage 26 is discharged from the airfoil via a radially extended slot or window 27 located along the trailing edge of the airfoil. As noted above, the trailing edge flow is governed by the pressure ratio over the trailing edge of the airfoil and the amount of blockage that is present within the trailing edge flow region.

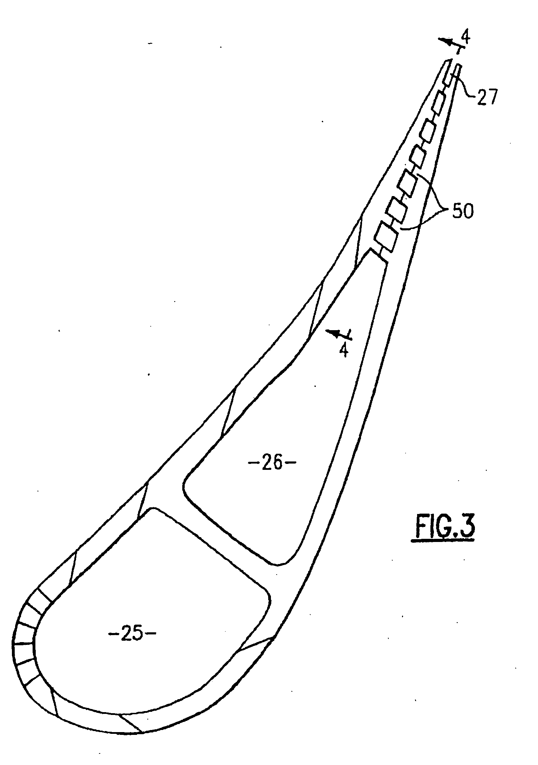

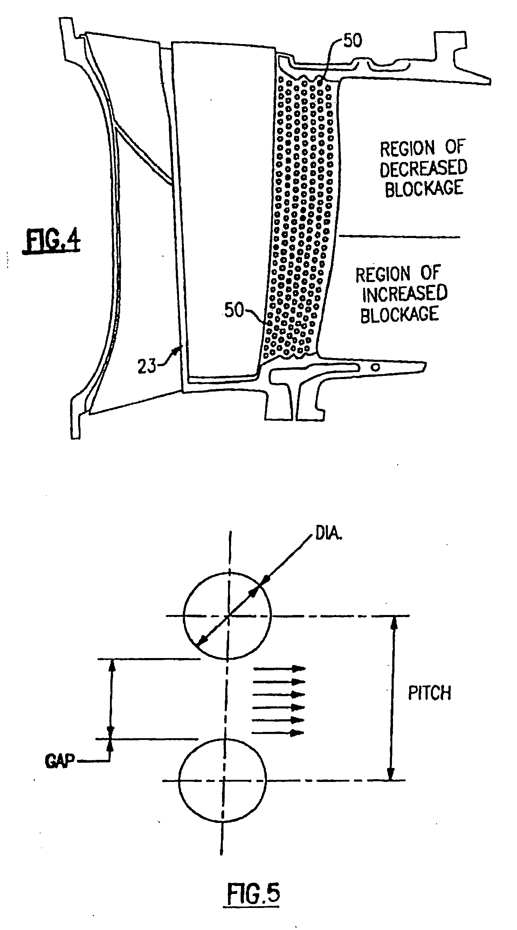

Blockage is the ratio of closed to open areas within the flow path in the trailing edge region. The external discharge pressure can vary significantly along the radial span of the airfoil, and as a result, the flow field along the trailing edge will be non-uniform where the blockage in the trailing edge region is relatively constant. The heat loading upon the airfoil can also vary significantly along the radial span. Accordingly, the amount of convective cooling required at various span locations will vary with respect to the temperature and pressure trailing edge profiles of the airfoil. Additionally, the amount of convective cooling potential, as a function of mass flow rates at various span locations, will vary with respect to the external trailing edge pressure profile. Typical pressure and temperature profiles are depicted in Figs. 6 and 7.

With further reference to Figs. 3 and 4, the trailing edge flow distribution profile is contoured in this embodiment of the invention by placing a barrier in the flow path within the trailing edge region. The barrier is arranged to provide a blockage to flow that is tailored to control the coolant flow distribution based upon either the pressure profile or temperature profile of the airfoil or a combination of both. The trailing edge flow is tailored to provide more or less convection to certain regions of the airfoil.

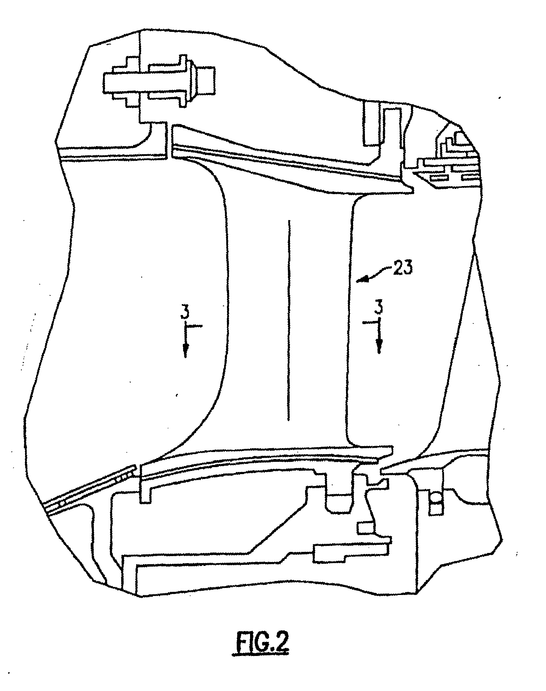

In this embodiment of the invention, banks of cylindrical pedestals 50-50 that are fabricated of the core material extend perpendicularly across the trailing edge flow path adjacent to the discharge window or slots. As illustrated in Fig. 5, the amount of blockage can be varied by altering the gap between adjacent pedestals. This can be done by changing the pitch of the pedestals from region to region or by changing the diameters of the pedestals. By varying the amount of blockage in various regions over the radial span of the airfoil, the trailing edge flow distribution profile can be tailored in regard to either the pressure or the temperature profiles of the airfoil, or a combination of both. Blockage is minimized in regions where more convective heat transfer is required and maximized in regions where less convective heat transfer is needed. Although true in the design used for Fig. 5, this may not be applicable for applications where pressure drop is managed differently and/or the design relies heavily on fin conduction effects.

The profile of the trailing edge flow is tailored in the embodiment of the invention such that internal convection levels result in metal temperatures which meet oxidation, creep, and thermal mechanical fatigue life requirements.
Conversely, the flow distribution may be varied to reduce convection so that coolant heatup along a passage is minimized, and thus allowing for more available heat flux potential in downstream regions.

The pedestals may be fabricated of a material that is different from the core material.

Although cylindrical pedestals are employed in this embodiment of the invention to establish blockage within the trailing edge flow, any type of barrier may be used in the practice of the invention which serves to tailor the flow distribution into a desired profile. For example, a wall or a series of walls can be erected in the discharge flow path having holes of various sizes and/or shapes located within the wall which serve to tailor the flow distribution into a desired profile. Here again, the barrier or barriers may be fabricated of any known core material. A ceramic may be a suitable material, as may a material containing a refractory metal.

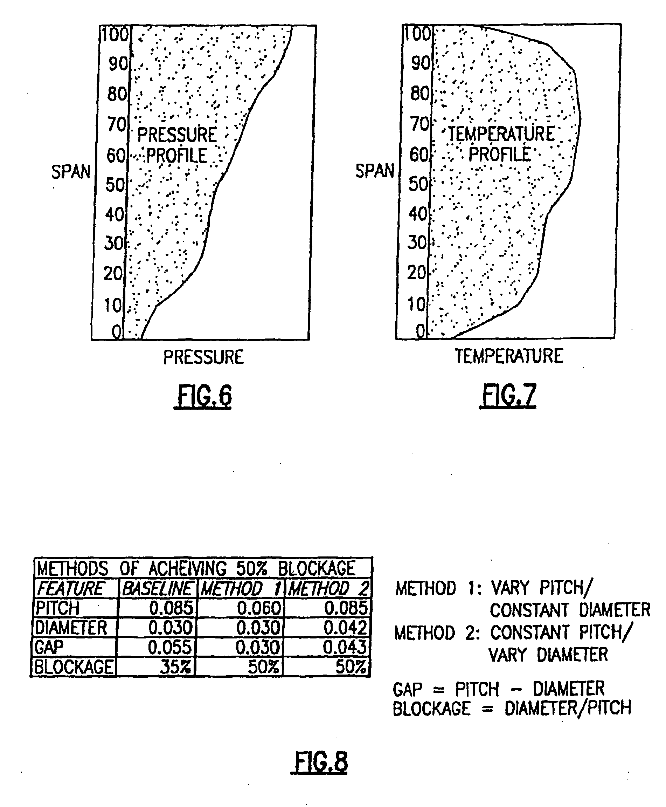

As illustrated in Figs. 5 and 8, the design of a basic pedestal system without flow control that has thirty-five percent blockage can be modified by varying either the pitch between pedestals and/or the diameter of the pedestals to vary the amount of blockage over the span of the airfoil and thus control the coolant flow distribution within the airfoil. Using the pedestal feature size to increase the gap size between pedestals will reduce the susceptibility of the trailing edge of the airfoil to become placed with dirt or the like. This method of increasing blockage in selected regions thus allows the core to better withstand the stresses involved in the casting processes.

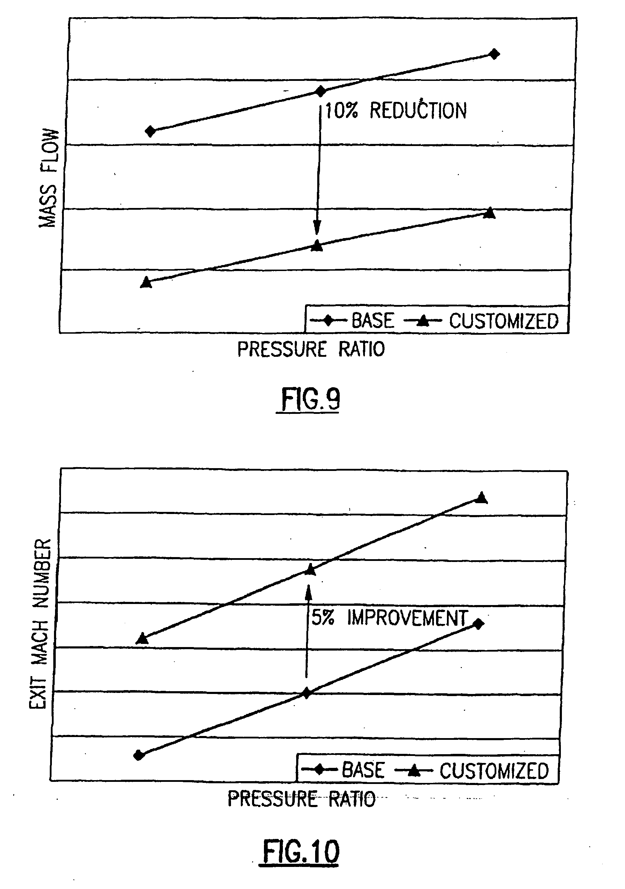

Customizing of the above noted basic system provides for trailing edge flow reduction and Mach number benefits. As illustrated in Fig. 9, the customization of the trailing edge features allow for a net reduction in cooling air. This reduction in cooling air increases engine performance by reducing pressure and enthalpy losses associated with coolant being introduced into the engine pass flow stream. As illustrated in Fig. 10, the customization of the trailing edge flow further allows for a net increase in the cooling air exit Mach number. This increase in Mach number results in more effective mixing of the coolant with the gases in the engine flow stream and thus serves to further increase engine performance.

While this invention has been particularly shown and described with reference to the preferred embodiment in the drawings, it will be understood by one skilled in the art that various changes in its details may be effected therein without departing from the scope of the invention, which is defined by the claims.

## Claims

1. An airfoil having a core containing a passage for conducting a coolant through the airfoil and discharging the coolant through a slot extending radially along the trailing edge of the airfoil, wherein said airfoil further includes:
a flow barrier mounted adjacent to said slot for presenting blockage to coolant moving through the trailing edge region of the airflow;
said flow barrier having openings therein for tailoring the coolant trailing edge flow profile along the radial span of the airfoil.

2. The airfoil of claim 1, wherein said barrier is fabricated of the same material as the airfoil core.

3. The airfoil of claim 1, wherein said barrier is fabricated of a material that is different from the core material.

4. The airfoil of claim 1, 2 or 3 wherein said barrier is constructed of a ceramic material.

5. The airfoil of claim 1, 2, 3 or 4, wherein the barrier is constructed of a material containing a refractory metal.

6. The airfoil of any preceding claim, wherein said openings are adapted to tailor the flow of air coolant.

7. The airfoil of any preceding claim, wherein the coolant trailing edge flow profile is based upon the pressure profile along the radial span of the airfoil.

8. The airfoil of any preceding claim, wherein the coolant trailing edge flow profile is based upon the temperature profile along the radial span of the airfoil.

9. The airfoil of claims 7 and 8, wherein the coolant trailing edge flow profile is based upon both the pressure profile and the temperature profile along the radial span of the blade.

10. The airfoil of any preceding claim, wherein said barrier contains a plurality of spaced apart cylindrical pedestals that are mounted perpendicularly to the coolant trailing edge flow.

11. The airfoil of claim 10, wherein the coolant flow profile is generated by varying the gap between the adjacent pedestals.

12. The airfoil of claim 11, wherein the coolant flow profile is generated by varying the pedestal diameters.

13. The airfoil of claim 11, wherein the coolant flow profile is generated by varying the pitch of the pedestals.

14. The airfoil of any of claims 1 to 9, wherein said barrier comprises at least one wall that is mounted adjacent to the trailing edge slot, said wall containing holes passing therethrough for tailoring the trailing edge flow distribution profile of the coolant.

15. The airfoil of claim 14, wherein the coolant flow profile is generated by varying the size and/or shape of said holes.

16. An airfoil having a core containing a passage for conducting a coolant through the airfoil and discharging the coolant through a slot extending radially along the trailing edge of the airfoil, wherein said airfoil further includes:
a flow barrier mounted adjacent to said slot for presenting blockage to coolant moving through the trailing edge region of the airflow;
said flow barrier having openings therein providing varying amounts of blockage in various regions over the radial extent of the slot.

17. An airfoil as claimed in claim 16 in combination with any of the features of claims 1 to 15.
